# EUROPÄISCHE PATENTSCHRIFT

(11) **EP 3 919 686 B1**
(45) Veröffentlichungstag und Bekanntmachung des Hinweises auf die Patenterteilung: **10.05.2023**
(21) Anmeldenummer: 21173557.6
(22) Anmeldetag: 12.05.2021
(51) Int. Cl.: E02D 29/12, H02G 9/10

(54) **RECHTECKIGER SCHACHT**
RECTANGULAR SHAFT
PUITS RECTANGULAIRE

(30) Priorität: 03.06.2020 DE 102020003343
(43) Veröffentlichungstag der Anmeldung: 08.12.2021
(73) Patentinhaber: Langmatz GmbH, 82467 Garmisch-Partenkirchen (DE)
(72) Erfinder:
(74) Vertreter: Flosdorff, Jürgen

(56) Entgegenhaltungen:
- WO-A1-2013/178644
- DE-B3-102010 050 964
- DE-U1-202007 014 465
- FR-A1- 2 715 676
- GB-A- 2 342 676

## Beschreibung

Die Erfindung betrifft einen rechteckigen Schacht, dessen Schachtwände aus übereinander angeordneten, aus Kunststoff gebildeten Wandelementen bestehen, auf denen ein oberer Stahlrahmen aufliegt. Der Schacht wird in das Erdreich eingebaut und nimmt u.a. Rohre und/oder Kabel auf, die weiter geleitet werden.

Bei bisher bekannten Schächten der betrachteten Art werden die vier Schachtwände aus übereinander angeordneten Wandelementen zusammengesetzt, die sich jeweils über die gesamte Länge der Schachtwände erstrecken und an den Ecken des Schachtes auf geeignete Weise zusammengesetzt sind. Die Schächte können unterschiedliche Abmessungen haben, wobei hierzu Wandelemente unterschiedlicher Länge hergestellt werden. Dies bringt erhebliche Kosten für die zugehörigen Formwerkzeuge mit sich, wobei auch die getrennte Lagerung der unterschiedlichen Wandelemente aufwändig ist.

Die DE-A-102010050964 offenbart einen Unterflur-Schacht, bei dem Schachtwände aus übereinander angeordneten, aus Kunststoff gebildeten Wandelementen bestehen, auf denen ein oberer Stahlrahmen aufliegt, wobei einander gegenüber liegende Schachtwände aus auf gleicher Höhe zusammengesetzten, in Längsrichtung kombinierten Wandelementen bestehen, die durch Linearverbinder aneinander befestigt sind, und wobei die in Längsrichtung kombinierten Wandelemente mit ihren einander zugewandten stirnseitigen Endabschnitten in die Linearverbinder eingesteckt sind. Die Linearverbinder haben vertikal verlaufende, in Richtung der Wandelemente vorstehende Führungsvorsprünge, in die die Wandelemente eingeschoben werden. Meist sind dabei mehrere Linearverbinder übereinander angeordnet. Der obere Stahlrahmen ist mittels vertikal verlaufender Zuganker mit einer Bodenplatte unter dem Schacht verspannt.

Der vorliegenden Erfindung liegt die Aufgabe zugrunde, eine Lösung für das Problem anzugeben, mit der die Herstellung und Lagerung von Schächten unterschiedlicher Abmessungen vereinfacht ist.

Diese Aufgabe wird erfindungsgemäß durch die Merkmale des Patentanspruchs 1 gelöst.

Vorteilhafte Ausgestaltungen der Erfindung sind in den Unteransprüchen gekennzeichnet.

Die Erfindung sieht vor, dass einander gegenüber liegende Schachtwände aus auf gleicher Höhe zusammengesetzten, in Längsrichtung kombinierten Wandelementen bestehen, die durch Linearverbinder aneinander befestigt sind.

Auf diese Weise können nach dem Baukastenprinzip Schachtwände unterschiedlicher Länge aus kleineren Wandelementen zusammengesetzt werden, die durch Linearverbinder so aneinander befestigt sind, dass geschlossene Schachtwände entstehen. So kann beispielsweise ein langgestreckter rechteckiger Schacht ausgebildet werden, der die doppelte Länge der zusammengesetzten Wandelemente hat. Bevorzugt ist, dass zwei einander gegenüberliegende Schachtwände auf diese Weise zusammengesetzt werden, die damit die Längswände des rechteckigen Schachtes bilden, wobei aber auch die in Querrichtung verlaufenden Schachtwände auf entsprechende Weise aus Wandelementen zusammengesetzt sein können. Wichtig ist dabei, dass die Linearverbinder die in Längsrichtung kombinierten Wandelemente so stabil zusammenhalten, dass der Schacht allen einwirkenden Belastungen, vorzugsweise aus Erddruck, stand hält.

Erfindungsgemäß ist vorgesehen, dass die in Längsrichtung kombinierten Wandelemente mit ihren einander zugewandten stirnseitigen Endabschnitten in die Linearverbinder eingesteckt sind. Dies ist schnell und einfach ohne die Hilfe von Werkzeugen zu bewerkstelligen und auch von ungeübten Monteuren schnell ausführbar. Dabei ist vorgesehen, dass die Endabschnitte in die Linearverbinder in ihrer Endstellung einrasten, sodass eine zug- und druckfeste Verbindung zwischen den beiderseitigen Wandelementen und dem mittigen Linearverbinder entsteht.

Die Linearverbinder sind bevorzugt ebenfalls im Kunststoff-Spritzgussverfahren hergestellt. Sie haben erfindungsgemäß an gegenüberliegenden Seiten Aussparungen, in die elastische Stege hineinragen, die beim Einführen der Endabschnitte der Wandelemente in die Aussparungen zurück gedrückt werden und in der Endstellung in Vertiefungen der Wandelemente einrasten. Die Endabschnitte der Wandelemente greifen dabei formschlüssig in die Aussparungen der Linearverbinder ein, so dass eine wackelfreie Verbindung zwischen den Bauteilen geschaffen ist.

Die Schachtwände sind aus zwei oder mehr übereinander angeordneten Wandelementen zusammengesetzt. Die Linearverbinder jeder Schachtwand sind zweckmäßigerweise so positioniert, dass sie vertikal miteinander fluchten. Dies ermöglicht es, dass nach einem weiterem Vorschlag der Erfindung an den Linearverbindern der Schachtwände an deren Innenseite jeweils eine Wandstütze befestigt ist, die sich bis zum Boden des Schachtes erstreckt. Dabei wird mit großem Vorteil vorgeschlagen, dass die Wandstütze in Bodennähe mit einer quer durch den Schacht verlaufenden Traverse verbunden ist, die zwei gegenüberliegende Wandstützen druck- und zugfest miteinander verbindet.

Die Wandstütze kann sich über die obersten Wandelemente hinaus bis zu dem oberen Stahlrahmen des Schachtes erstrecken und an diesem Stahlrahmen befestigt sein. Damit verläuft ein auf den Schacht einwirkender Kraftfluß in vertikaler Richtung über die übereinander angeordneten Wandelemente und die Bodentraverse und wird letztendlich über den oberen Stahlrahmen in horizontaler Ebene geschlossen, wodurch der Schacht eine große Stabilität erhält und auch bei unvorhersehbaren Setzbewegungen im Erdreich unbeschädigt bleibt.

Die Wandstütze kann sich beidseitig über die Linearverbinder hinaus erstrecken, so dass die zugehörigen Wände auch bei großem seitlichen Erddruck ihre geradlinige Erstreckung behalten.

Die Wandstütze kann an den Linearverbindern und gegebenenfalls auch an den angrenzenden Wandelementen angeschraubt sein.

Wenn die Wandstütze und die Traverse aus flachen Metalllaschen bestehen, wie dies bevorzugt ist, bilden sie im Inneren des Schachtes keine unerwünschten Hindernisse.

In einer weiteren Einzelheit wird vorgeschlagen, dass die Traverse mit beiden Endabschnitten in Halterungen eingesteckt ist, die an den Wandstützen und an Bodenelementen befestigt sind und an denen die Traverse in der gewünschten Länge fixiert ist.

Weitere Einzelheiten der Erfindung ergeben sich aus der nachfolgenden Beschreibung einer bevorzugten Ausführungsform sowie anhand der Zeichnungen. Dabei zeigen:
- Figur 1: einen Schacht mit in Längsrichtung kombinierten Wandelementen;
- Figur 2: einen unmontierten Linearverbinder mit beiderseitigen Wandelementen;
- Figur 3: die Anordnung gemäß Figur 2 im montierten Zustand;

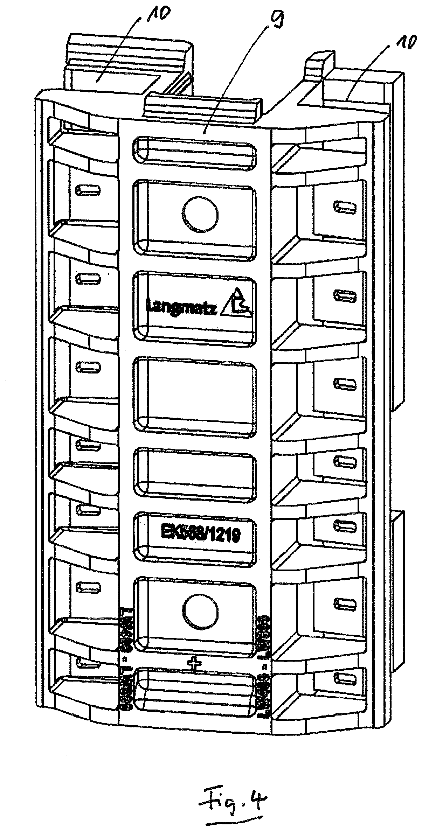

- Figur 4: einen Linearverbinder in perspektivischer Darstellung;
- Figur 5: eine Aufsicht auf den Linearverbinder, unmontiert;

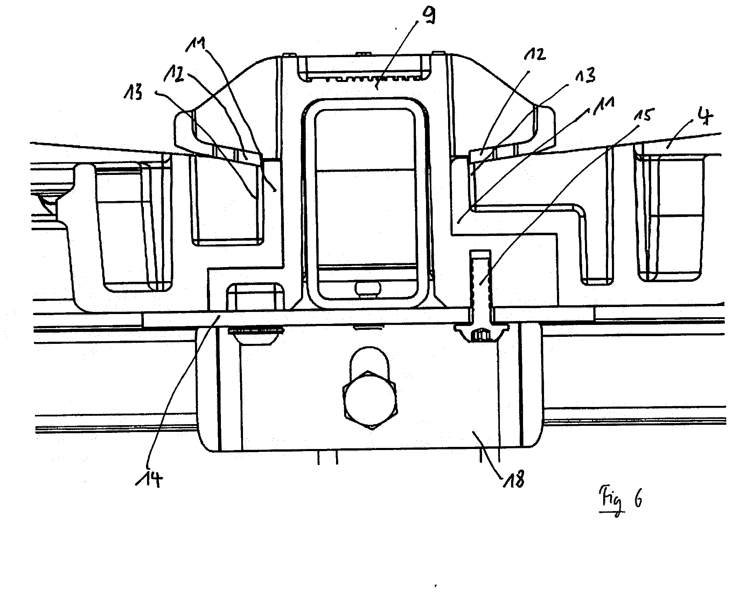

- Figur 6: den Linearverbinder im montierten Zustand mit einer Wandstütze;

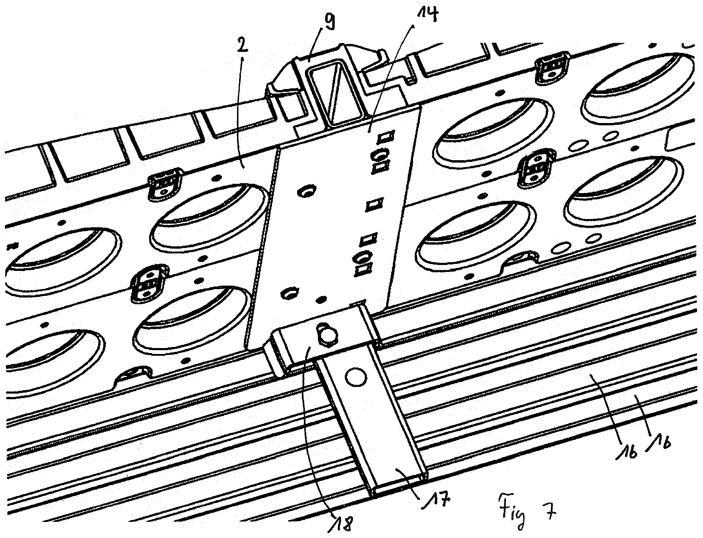

- Figur 7: eine perspektivische Darstellung der Wandelemente mit Linearverbinder, Wandstütze und Bodentraverse.

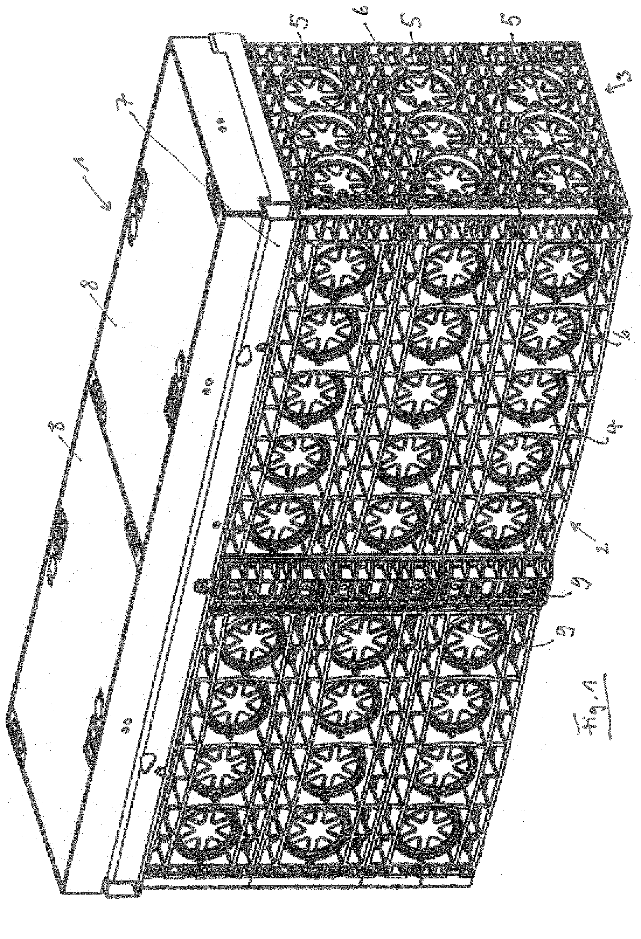

Figur 1 zeigt eine perspektivische Darstellung eines erfindungsgemäßen rechteckigen Schachtes 1, dessen Längsseiten 2 und kurze Querseiten 3 aus drei Lagen von übereinander angeordneten Wandelementen 4, 5 zusammengesetzt sind, die an den Ecken des Schachtes 1 auf geeignete Weise verbunden sind. Die Wandelemente 4, 5 haben kreisförmige Wandöffnungen 6, die durch herausbrechbare Wandelemente geschlossen sind, so dass Rohre, Kabel oder dergleichen durch die Wandöffnungen hindurchführbar sind.

Die Wandelemente 4, 5 sind im Spritzgussverfahren aus Kunststoff hergestellt.

Auf der oberen Reihe der Wandelemente 4, 5 liegt ein Stahlrahmen 7 auf, in den Schachdeckel 8 eingesetzt sind.

Die in Figur 1 sichtbare Längswand 2 ist dadurch gebildet, dass kurze Wandelemente mit Hilfe von Linearverbindern 9 zusammengesetzt sind. Die kurzen Wandelemente 4 sind dabei jeweils auf gleicher Höhe mit ihren stirnseitigen Endabschnitten in die Linearverbinder 9 eingesteckt, so dass sie in Längsrichtung miteinander kombiniert sind. Die Wandelemente 4 der beiden Seiten können dabei unterschiedlich lang sein, wie dies bei der Ausführungsform der Figur 1 der Fall ist, oder auch gleich lang sein.

Auf diese Weise ist ein langgestreckter rechteckiger Schacht gebildet, dessen einander gegenüberliegende Längswände 2 aus relativ kurzen Wand-elementen besteht, wodurch die Herstellung und die Lagerung des Schachtes vereinfacht ist.

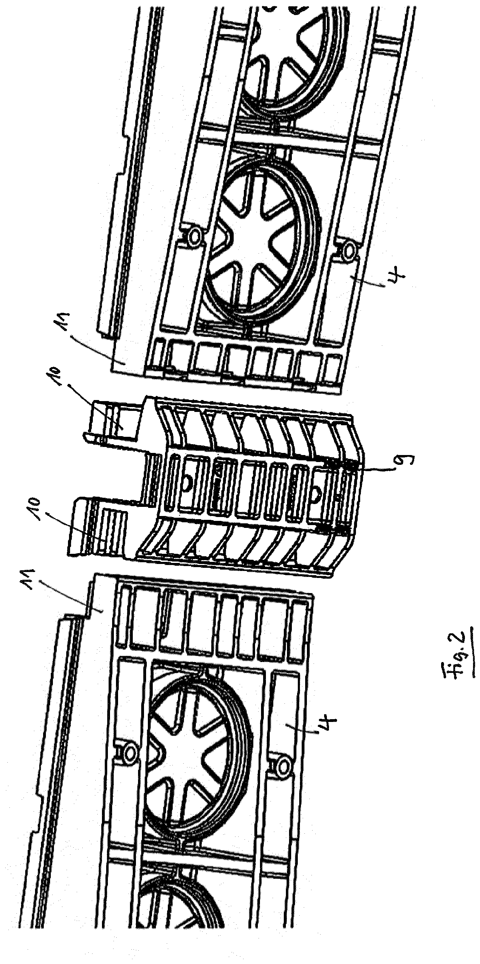

Figur 2 zeigt, dass ein Linearverbinder 9 an seinen gegenüberliegenden Seiten Aussparungen 10 aufweist, in die die stirnseitigen Endabschnitte 11 der beiderseitigen Wandelemente 4 im wesentlichen formschlüssig einschiebbar ist, so dass eine wackelfreie Verbindung zwischen dem Linearverbinder 9 und den beiden in Längsrichtung kombinierten Wandelementen 4 entsteht.

Der Linearverbinder 9 hat eine Rippenstruktur, die dem Linearverbinder 9 eine große Stabilität verleiht. Der Linearverbinder 9 ist ebenso wie die Wandelemente 4, 5 im Spritzgussverfahren aus Kunststoff hergestellt.

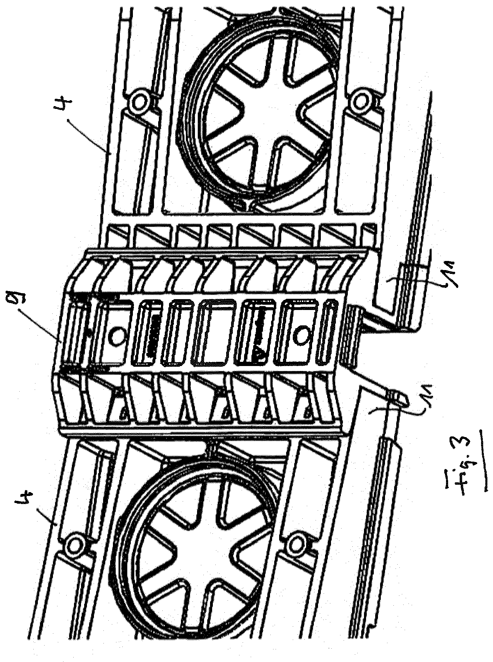

Figur 3 zeigt den zusammengesetzten Zustand eines Linearverbinders 9 mit den beidseitigen Wandelementen 4, wobei die stirnseitigen Endabschnitte 11 in die Aussparungen 10 des Linearverbinders 9 eingeschoben sind.

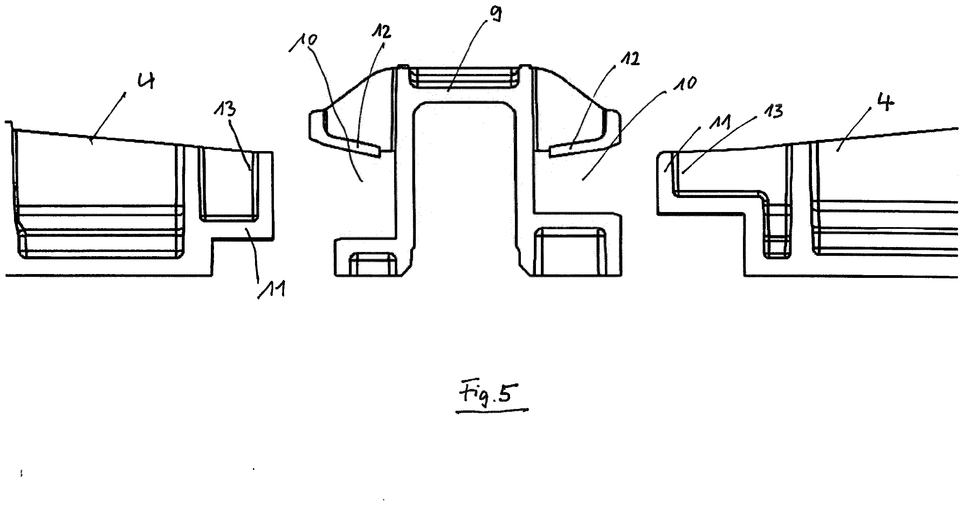

Figur 5 zeigt, dass der Linearverbinder 9 elastische Stege 12 aufweist, die in die Aussparungen 10 hineinragen und beim Einschieben der stirnseitigen Endabschnitte 11 der Wandelemente 4 zurückgedrückt werden, bis sie in der Endstellung in Vertiefungen 13 der Wandelemente 4 einrasten. Damit sind die linear kombinierten Wandelemente 4 druck- und zugfest mit den Linearverbindern 9 zusammengesetzt.

Die Linearverbinder 9 sind, wie beispielsweise Figur 1 zeigt, vertikal übereinander angeordnet. An der Innenseite der Schachtwand 2 sind die Linearverbinder 9 von einer Wandstütze 14 überdeckt, die durch eine Metallplatte 14 gebildet ist, und sich über die gesamte Höhe der Längswand 2 erstreckt. Die Wandstütze 14 ist mit Schrauben 15 an den Linearverbindern 9 befestigt und ragt seitlich über diese hinaus, um außerdem die Endabschnitte der linear kombinierten Wandelemente 4 nach innen abzustützen. Die Wandstütze 14 kann auch mit dem oberen Stahlrahmen verschraubt sein.

Der Boden des Schachtes ist durch Metallprofile 16 gebildet, die auf dem Untergrund aufliegen. Die beiden einander gegenüberliegenden Wandstützen 14 der beiden Längswände 2 sind durch eine auf den Metallprofilen 16 aufliegende Traverse 17 miteinander verbunden, die an beiden Enden in Halterungen 18 aufgenommen sind, die an der Wandstütze 14 und gegebenenfalls an den Bodenprofilen 16 befestigt sind. Die Länge der Traverse 17, die durch eine flache Metalllasche gebildet ist, ist in den Halterungen 18 einstellbar.

Die Wandstütze 14 und die damit verbundene Traverse 17 verleihen dem Schacht 1 eine große Stabilität, so dass er allen einwirkenden Kräften unbeschädigt Stand halten kann.

## Patentansprüche

1. Rechteckiger Schacht (1), dessen Schachtwände (2, 3) aus übereinander angeordneten, aus Kunststoff gebildeten Wandelementen (4, 5) bestehen, auf denen ein oberer Rahmen (7) aufliegt, wobei einander gegenüberliegende Schachtwände (2) aus auf gleicher Höhe zusammengesetzten, in Längsrichtung kombinierten Wandelementen (4) bestehen, die durch Linearverbinder (9) aneinander befestigt sind, und wobei die in Längsrichtung kombinierten Wandelemente (4) mit ihren einander zugewandten stirnseitigen Endabschnitten (11) in die Linearverbinder (9) eingesteckt sind,
wobei die Linearverbinder (9) an gegenüber liegenden Seiten Aussparungen (10) aufweisen, **dadurch gekennzeichnet, dass** der Rahmen ein Stahlrahmen (7) ist, dass die Aussparungen (10) Vertiefungen (13) aufweisen und dass die Endabschnitte (11) in die Linearverbinder (9) eingerastet sind, wobei in die Linearverbinder (9) elastische Stege (12) hineinragen, die beim Einführen der Endabschnitte (11) der Wandelemente (4) in die Aussparungen (10) zurück gedrückt werden, bis sie in die Vertiefungen (13) der Wandelemente (4) einrasten.

2. Rechteckiger Schacht nach Anspruch 1,
**dadurch gekennzeichnet,**
**dass** die Linearverbinder (9) jeder Schachtwand (2) vertikal miteinander fluchten.

3. Rechteckiger Schacht nach einem der Ansprüche 1 oder 2,
**dadurch gekennzeichnet,**
**dass** an den Linearverbindern (9) beider Schachtwände (2) an deren Innenseite jeweils eine Wandstütze (14) befestigt ist, die sich bis zum Boden des Schachtes (1) erstreckt und dort mit einer Traverse (17) verbunden ist, die die beiden Wandstützen (14) druck- und zugfest miteinander verbindet.

4. Rechteckiger Schacht nach Anspruch 3,
**dadurch gekennzeichnet,**
**dass** die Wandstütze (14) an den Linearverbindern (9) angeschraubt ist.

5. Rechteckiger Schacht nach einem der Ansprüche 3 oder 4,
**dadurch gekennzeichnet,**
**dass** die Wandstütze (14) und die Traverse (17) aus flachen Metalllaschen bestehen.

6. Rechteckiger Schacht nach einem der Ansprüche 3 bis 5,
**dadurch gekennzeichnet,**
**dass** die Traverse (17) mit beiden Endabschnitten in Halterungen (18) eingesteckt sind, die an den Wandstützen (14) und an Bodenelementen (16) befestigt sind.

## Claims

1. A rectangular shaft (1), the shaft walls (2, 3) of which consist of wall elements (4, 5), which are arranged above one another and are formed of plastic material and on which rests an upper frame (7), wherein opposing shaft walls (2) consist of wall elements (4), which are assembled at the same height and combined in the longitudinal direction and are connected to one another by linear connectors (9), and wherein the wall elements (4) combined in the longitudinal direction are plugged with their front end sections (11) directed towards one another into the linear connectors (9), wherein the linear connectors (9) have recesses (10) on opposing sides, **characterised in that** the frame is a steel frame (7), that the recesses (10) have depressions (13) and that the end sections (11) are locked into the linear connectors (9), wherein elastic webs (12) project into the linear connectors (9), which, when the end sections (11) of the wall elements (4) are inserted into the recesses (11), are pressed back until they snap into the depressions (13) in the wall elements (4).

2. A rectangular shaft as claimed in Claim 1, **characterised in that** the linear connectors (9) of each shaft wall (2) are vertically aligned with one another.

3. A rectangular shaft as claimed in one of Claims 1 or 2, **characterised in that** fastened to the linear connectors (9) of both shaft walls (2) on their inner surface there is a respective wall strut (14), which extends to the base of the shaft (1) and is connected there to a crossbeam (17), which connects the two wall struts (14) together in a pressure- and tension-resistant manner.

4. A rectangular shaft as claimed in Claim 3, **characterised in that** the wall strut (14) is connected to the linear connectors (9) by screws.

5. A rectangular shaft as claimed in one of Claims 3 or 4, **characterised in that** the wall strut (14) and the crossbeam (17) consist of flat metal straps.

6. A rectangular shaft as claimed in one of Claims 3 to 5, **characterised in that** both end sections of the crossbeam (17) are inserted into mountings (18), which are fastened to the wall struts (14) and to base elements (16).

## Revendications

1. Puits rectangulaire (1), dont les parois de puits (2, 3) sont constituées d'éléments de paroi (4, 5) disposés les uns au-dessus des autres, formés de matière plastique, sur lesquels repose un cadre supérieur, dans lequel les parois de puits (2) opposées les unes aux autres sont constituées d'éléments de paroi (4) assemblés à la même hauteur, combinés dans la direction longitudinale, qui sont fixés les uns aux autres par des raccords linéaires (9), et dans lequel les éléments de paroi (4) combinés dans la direction longitudinale sont enfichés avec leurs parties d'extrémité (11) frontales tournées les unes vers les autres dans les raccords linéaires (9),
dans lequel les raccords linéaires (9) présentent sur des faces opposées des évidements (10), **caractérisé en ce que** le cadre présente un cadre en acier (7), que les évidements (10) présentent des creux (13) et que les parties d'extrémité (11) sont encliquetées dans les raccords linéaires (9), dans lequel des nervures élastiques (12) font saillie dans les raccords linéaires (9), qui lors de l'introduction des parties d'extrémité (11) des éléments de paroi (4) dans les évidements (10), sont repoussées jusqu'à ce qu'elles s'encliquètent dans les creux (13) des éléments de paroi (4).

2. Puits rectangulaire selon la revendication 1,
**caractérisé en ce**
**que** les raccords linéaires (9) de chaque paroi de puits (2) sont en alignement les uns avec les autres verticalement.

3. Puits rectangulaire selon l'une quelconque des revendications 1 ou 2,
**caractérisé en ce**
**que** respectivement un support de paroi (14), qui s'étend jusqu'au fond du puits (1) et y est relié à une traverse (17), qui relie les deux supports de paroi (14) l'un à l'autre de manière résistante à la pression et à la traction, est fixé aux raccords linéaires (9) des deux parois de puits (2) sur la face intérieure de celles-ci.

4. Puits rectangulaire selon la revendication 3,
**caractérisé en ce**
**que** le support de paroi (14) est vissé sur les raccords linéaires (9).

5. Puits rectangulaire selon l'une quelconque des revendications 3 ou 4,
**caractérisé en ce**
**que** le support de paroi (14) et la traverse (17) sont constitués de languettes métalliques plates.

6. Puits rectangulaire selon l'une quelconque des revendications 3 à 5,
**caractérisé en ce**
**que** la traverse (17) est enfichée avec les deux parties d'extrémité dans des éléments de retenue (18), qui sont fixés aux supports de paroi (14) et aux éléments de fond (16).
